# EUROPEAN PATENT APPLICATION

(11) **EP 4 837 861 A1**
(43) Date of publication of application: **11.11.2026**
(21) Application number: 25174284.7
(22) Date of filing: 05.05.2025
(51) Int. Cl.: B65G 1/04, G06Q 10/08

(54) **A SERVICE ROBOT**

(71) Applicant: MOVU, 9160 Lokeren (BE)
(72) Inventor: Lemoine, Fabrice, 2600 Berchem (BE)
(74) Representative: Ipsilon Belgium

(57) **Abstract**

A shuttle (1000) adapted to move in an automated storage comprising a racking frame (2000), the shuttle (1000) comprising:
- at least one visual inspection means (101);
- one or more motion measurement means (102);
- at least one ambient sensor (103);
- a processor (104) operatively connected to the at least one visual inspection means (101), the one or more motion measurement means (102) and the at least one ambient sensor (103);
- one or more communication means (1004);
wherein
- the processor (104) is configured to receive and process the signals transmitted by at least one of the one or more communication means (1004) to generate processed signals; and
- at least one transmission means (105) adapted to transmit the processed signals to control the shuttle's movement and/or to communicate with one or more external systems within the automated storage.

## Description

### Technical Field

The present invention generally relates, amongst others, to a shuttle adapted to move in an automated storage comprising a racking frame.

### Background

Modern warehouses increasingly rely on automated storage systems to efficiently manage goods. With rising warehouse management costs, maximizing storage volume has become essential, particularly by optimizing the use of available space. Consequently, racking systems are designed to be taller and denser. To further enhance space utilization and automate warehouse operations, shuttles are introduced, eliminating the need for aisles between racks. These shuttles move within the racking system to retrieve or store goods at designated locations. Typically, they travel in two horizontal directions, but they can also operate on multiple levels. Some shuttles are capable of moving between levels independently, while others rely on dedicated lifts integrated into the racking system.

However, the use of automated storage systems can lead to the accumulation of dirt and debris. Components such as bolts or nuts may loosen due to vibrations caused by shuttles moving along the rails or the repeated loading and unloading of goods. Additionally, improperly stacked goods may fall from shuttles in transit. Accidental collisions between shuttles can also occur, potentially spilling goods or even damaging the racking structure. As a result, regular or occasional inspections and maintenance are necessary, often requiring operators to enter the racking system. This not only disrupts warehouse operations but also results in downtime.

Furthermore, after the installation of a racking system, its components may be soiled due to transportation. Screws and other small parts might have fallen and been left behind. A thorough inspection and cleaning immediately after installation are necessary to ensure a safe and efficient storage environment.

### Summary

It remains challenging to ensure thorough inspection of structural issues in all critical areas, including those that are inaccessible. In some examples, inspection systems rely on cameras mounted on forklifts or stacker cranes to scan the area, which primarily detects damage on vertical uprights visible from the side. However, in multi-deep complex environments, such as for example large warehouses and silos, this setup fails to cover critical areas, such as for example side rails, beams, and section plates, which are often located deep within the structure and inaccessible to forklift-mounted cameras or operators.

It remains challenging to ensure accurate defect identification given the dynamic environment of an automated storage by relying solely on visual inspection methods. In real life, large racking systems often generate vibrations when shuttles travel through the racking system. These vibrations can interfere with visual inspection methods and hinder accurate defect identification.

It remains challenging to ensure accurate defect identification in view of the ever-changing environmental conditions in automated storage by relying solely on visual detection methods. Industrial warehouses often experience fluctuations in lighting, temperature, and other environmental conditions, which can degrade image quality and cause detection model to drift over time, impacting accuracy. Relying solely on visual data under these changing conditions can result in unreliable defect detection as the environment changes.

It is thus an object of embodiments of the present invention to propose a shuttle which avoids to a large extent, even avoids completely the inherent shortcomings of the prior art. More specifically, it is an object of embodiments of the present invention to propose a shuttle adapted to move in the automated storage comprising a racking frame.

There is a need for a shuttle which can thoroughly, accurately and reliably detect abnormalities in or on the racking frame of the automated storage. There is a need for a shuttle which can thoroughly, accurately and reliably detect abnormalities in or on the racking frame of the automated storage, while removing foreign material and foreign objects from the racking frame.

According to a first aspect of the disclosure, a shuttle is provided. The shuttle is adapted to move in an automated storage comprising a racking frame, the shuttle comprising:
- at least one visual inspection means adapted to acquire images of the shuttle's environment;
- one or more motion measurement means adapted to detect movement parameters of the shuttle;
- at least one ambient sensor adapted to detect ambient conditions of the shuttle;
- a processor operatively connected to the at least one visual inspection means, the one or more motion measurement means and the at least one ambient sensor;
- one or more communication means adapted to transmit signals to the processor, the signals comprising:
   ∘ visual inspection signals acquired by the at least one visual inspection means; and/or
   ∘ movement parameter signals acquired by the one or more motion measurement means; and/or
   ∘ ambient condition signals acquired by the at least one ambient sensor; wherein
- the processor is configured to receive and process the signals transmitted by at least one of the one or more communication means to generate processed signals; and
- at least one transmission means adapted to transmit the processed signals to control the shuttle's movement and/or to communicate with one or more external systems within the automated storage.

In the context of the present disclosure, a shuttle refers to a vehicle that travels between two locations at regular intervals, typically short distances, in an automated storage. The shuttle can be a mobile robot, or can be an autonomous machine that is capable of locomotion. The shuttle can move within the shuttle's environment and is not fixed to one physical location. The shuttles can also be Autonomous Mobile Robot, AMR, meaning that they are able to navigate in an uncontrolled environment without the need for physical or electromechanical guidance devices. Alternatively, the shuttle may rely on guidance devices that enable the shuttle to travel along a predefined navigation route in a relatively controlled space. Preferably, the shuttle is a wheeled robot.

It is advantageous that the shuttle comprises at least one visual inspection means. This improvement contributes to providing a complete 360-degree inspection capability within the racking frame. As a result, in multi-deep complex environments, such as for example large warehouses and silos, critical areas that can be hard to be fully covered by traditional means, such as for example side rails, beams, section plates, and/or any other possible area, can be inspected. Overall, this improvement ensures thorough detection of structural issues in all critical areas, comprising those that are otherwise inaccessible. Moreover, the provision of the at least one visual inspection means can reduce the number of interventions in the racking frame by an operator, in order to inspect the racking frame. The shuttle with the at least one visual inspection means on board, may pass more regularly through the whole racking frame, and may notice deviations or anomalies in the racking frame at a much earlier point in time. This improvement can cause the wear or the damage in the racking frames due to the occurrence of anomalies to be reduced, and hence limiting the intervention time to remove the anomalies or emerging wear.

It is advantageous to comprise one or more motion measurement means adapted to detect movement parameters of the shuttle, such as for example attitude, orientation, position, velocity, acceleration, and/or rotational speed of the shuttle. Moreover, the one or more motion measurement means can provide complementary data to the at least one visual inspection means, thereby improving the stability and clarity of the visual inspection means, such as for example a camera vision system. More specifically, the one or more motion measurement means can detect an impact of the shuttle's motion and vibration on the visual inspection means, such as for example the camera vision system, thereby allowing real-time adjustments to stabilize the acquired images of the shuttle's environment and reduce noise interference. Preferably, noise interference can be largely reduced, such as for example minimizing blur and motion artifacts. Overall, the one or more motion measurement means enable the shuttle to differentiate between true structural issues and motion-induced noise, thereby ensuring more accurate defect identification.

It is advantageous that the shuttle comprises at least one ambient sensor adapted to detect ambient conditions of the shuttle, which contributes to improving data accuracy and reliability of the at least one vision inspection means, thereby ensuring that shuttle's performance remains consistent and accurate over time. The automated storage, such as for example industrial warehouses, often experience fluctuating lightning, temperature, and/or any other environmental conditions, which can degrade data quality, such as for example image quality of the visual inspection means, causing detection model to drift over time and impact accuracy. The at least one ambient sensor can effectively refine the data from the visual inspection means under these varied environmental conditions, where the data may result in unreliable defect detection as the environmental conditions change. More specifically, the preferred thermal sensor detects subtle temperature variations indicating structural issues which may not be visible to the visual inspection means, such as for example, the camera vision system. More specifically, the preferred humidity sensor can monitor moisture levels to anticipate corrosion risk in vulnerable structural areas.

It is advantageous to combine visual data with other additional sensory inputs disclosed in the present disclosure, to provide a more stable and adaptive inspection system. This multi-sensor approach automatically calibrates the inspection system in real time by cross-referencing data from multiple sensors, thereby minimizing model drift.

It is advantageous for the shuttle to comprise an on-board processor, thereby offering a modular automation solution to implement customized solutions and to flexibly adjust the customized solutions even if general conditions change. With the on-board processor, each shuttle is independent, which means that each shuttle can obtain accurate and reliable abnormal information in or on the racking frame while traversing the racking frame without collisions. Moreover, each shuttle is suitable for receiving orders from the one or more external systems to adjust its movement and/or perform certain tasks. This modular automation solution enabled by the shuttle disclosed in the present disclosure is advantageous to rapid implementation in a certain application circumstance. Depending on the needs of a specific automated storage, such as for example increased demand, shorter turnaround times, better peak time management, and/or any other possible situation, more or fewer shuttles can be introduced to the specific automated storage to optimize operation efficiency. No additional installation is required to adapt to new circumstances, which can effectively reduce construction costs and better adapt to a rapidly changing society.

It is advantageous to employ shuttles to detect anomalies in or on the racking frame in the automated storage, because this provides a solution for implementing reliable, sustainable, and safe automated storages. The anomalies, especially in large, automated storage, are hard to be detected by human operators. Most anomalies are difficult to detect by human eyes, even with hand-held tools. In the event that structural anomalies have already occurred, such as for example loose or missing fasteners, racking frame corrosion, and/or any other possible structural anomaly, human operator intervention poses additional safety risks to the human operator. The possible downtime involved may place an additional burden on the fast-paced operation of the automated storage. In contrast, the shuttles that are relatively light and low energy consumption, and have reliable accuracy for anomaly detection offer a solution that can continuously inspect, report and/or remove anomalies on or in the racking frame. This improvement can provide long-term consistent and reliable maintenance of the automated storage and largely reduce the safety risks that may occur in the automated storage.

By matching one data source with another, the shuttle maintains consistency under fluctuating environmental conditions, thereby improving data accuracy and stability. This adaptive calibration of the inspection system can achieve reliable defect detection, reduce false positives, and improve overall validation reliability, thereby ensuring that the shuttle's performance remains consistent and accurate over time.

An automated storage refers to a storage comprising a variety of computer-controlled systems adapted to automatically place and retrieve goods from defined storage locations. The automated storage comprises a racking frame, which can store materials in multiple levels arranged horizontally. The automated storage can be two-dimensional or three-dimensional.

The shuttle is adapted to move in the automated storage. The shuttle may move in two directions within the racking frame, such as for example within a substantially horizontal plane. Alternatively, the shuttle may not only move in in two directions within a substantially horizontal plane, but may also move vertically on different levels of the automated storage, i.e., from one level to another level. Alternatively, the racking frame may comprise a plurality of ramps. Thus, the shuttle may move up or down the plurality of ramps. The automated storage can be two-dimensional, wherein the shuttle may move in two different, and generally mutually perpendicular directions within a substantially horizontal plane. The automated storage may comprise a plurality of parallel levels on which the shuttles may move, which are located at different heights relative to the floor level of the automated storage. The shuttles may be moved between the levels by means of a lifting device, such as for example a lift. Hence the automated storage system can be a three-dimensional automated storage. Optionally, the shuttle may comprise a driving means to move the shuttle between the levels of the automated storage, such as for example along vertical tracks in the racking frame of the automated storage.

The shuttle comprises at least one visual inspection means adapted to acquire images of the shuttle's environment. The shuttle may comprise one visual inspection means. Preferably, the shuttle may comprise more than one visual inspection means, each or together adapted to acquire images of the racking frame along the shuttle's moving direction and/or in the shuttle's surroundings, i.e., in the shuttle's environment. Preferably, the at least visual inspection means are adapted to optically detect anomalies in and/or on the racking frame as the shuttle passes through the racking frame, by comparing captured images or information derived from these images, with expected images or expected information of the portion of the racking frame from which the images, signals or information is acquired. The identification of such anomalies may be based on an artificial intelligence system and/or on machine-learning.

The shuttle comprises one or more motion measurement means adapted to detect movement parameters of the shuttle. The shuttle may comprise one motion measurement means. Preferably, the shuttle may comprise more than one motion measurement means, each or together adapted to detect movement parameters of the shuttle. The motion measurement means can be an electronic device based on a set of sensors that analyze data generated by the set of sensors. The set of sensors preferably comprises one or more accelerometers, gyroscopes, and/or magnetometers. Preferably, the set of sensors comprises at least three accelerometers, at least three gyroscopes, and at least three magnetometers. Alternatively, the set of sensors comprises at least three accelerometers, at least three gyroscopes and/or at least three magnetometers. Therefore, the motion measurement means preferably provide information in terms of acceleration, angular velocity and/or orientation in three directions, namely, X: pitch, Y: roll, Z: yaw, respectively. Preferably, data is measured by the accelerometers, gyroscopes, and magnetometers along these three directions. Alternatively, the motion measurement means may have more degrees of freedom in addition to X: pitch, Y: roll and Z: yaw.

The shuttle comprises at least one ambient sensor adapted to detect ambient conditions of the shuttle. The shuttle may comprise one ambient sensor. Preferably, the shuttle comprises more than one ambient sensor for sensing, such as for example temperature, humidity, luminosity, and/or any other useful ambient condition.

The shuttle further comprises a processor operatively connected to the at least one visual inspection means, the one or more motion measurement means and the at least one ambient sensor. The shuttle further comprises one or more communication means adapted to transmit signals to the processor. The shuttle may comprise one communication means. Preferably, the shuttle comprises more than one communication means. The signals transmitted to the processor comprises visual inspection signals acquired by the at least one visual inspection means, and/or movement parameter signals acquired by the one or more motion measurement means, and/or ambient condition signals acquired by the at least one ambient sensor. The processor is configured to receive and process the signals transmitted by at least one of the one or more communication means to generate processed signals. The shuttle further comprises at least one transmission means adapted to transmit the processed signals to control the shuttle's movement and/or to communicate with one or more external systems within the automated storage. The shuttle may comprise one transmission means. Preferably, the shuttle comprises more than one transmission means.

The one or more communication means are preferably on-board wireless communication means. The visual inspection signals and/or the movement parameter signals and/or the ambient condition signals can be sent to the processor, where the visual inspection signals and/or movement parameter signals and/or ambient condition signals is/are processed. The visual inspection signals and/or movement parameter signals and/or ambient condition signals can be sent wirelessly by any known system, such as for example infrared signals, ultrasonic signals, radio signals, using Bluetooth or Wi-Fi communication, and alike. Preferably, each shuttle has a specific Internet Protocol address, IP address.

The processor may recognize the anomalies and may even identify the anomaly. The processor, based upon the position of the shuttle and the anomaly detected, may identify the action to be taken to remove the anomaly from the racking frame. Via the transmission means on board, preferably wireless communication means, the shuttle may receive a signal to perform a predefined action. Alternatively, or additionally, the process may trigger a signal or an instruction to the automated storage controlling to perform a maintenance intervention, or even to shut down the activity in a part or the whole automated storage. The processed signals can be subsequently sent to one or more external systems, such as for example a database and can be centrally analyzed, such as for example by a reporting system, to generate reports on the findings from the measurements. More specifically, the processor can analyze the data to detect wear and tear of the racking frame and/or rails and/or tracks, thereby allowing for, such as for example alerting a service technician on a racking frame and/or track failure. Alternatively, the findings can be used to schedule preventative maintenance actions, or adapt shuttle's motion to a certain circumstance to ensure safety, such as for example to lower the allowable speed of the shuttle in certain areas that would suffer damage. The processor preferably classifies detected defects based on urgency and type, such as for example bent metal, loose screws, debris. In sequence, notifications can be sent to the operator of the automated storage in the form of warnings, errors, and/or automated reports, thereby providing immediate visibility into evaluations and critical issues. Additionally, the shuttle can transmit data to one or more external systems, enabling real-time updates and maintenance scheduling. Moreover, the shuttle preferably can log data at regular intervals, creating a defect history that aids predictive maintenance, thereby ensuring that repairs are performed proactively before failure occurs.

The one or more external systems can comprise a software, such as for example a customized warehouse execution system, WES, which can coordinate various tasks, equipment, and resources within the automated storage. The one or more external systems may assign tasks to each of the shuttles, track productivity of each of the shuttles, monitor each shuttle's performance and manage each shuttle's work schedules and shifts. The software may perform different tasks at a plurality of levels when needed, such as for example at three different levels. Preferably, the plurality of levels are integrated into one software interface. The one or more external systems may perform one or more functions related to the shuttle and/or the automated storage, wherein the one or more functions comprise at least the following: order acceptance, task transmission, flow control, management and optimization of warehouse, operations, fleet management, traffic control, route planning, task planning and management, battery management, idle management, visualization, shuttle and robot routing, command control.

According to some embodiments, the shuttle may further comprise at least one distance sensor that is adapted to determine the shuttle's distance relative to the racking frame; wherein the processor may be further operatively connected to the at least one distance sensor; and wherein the one or more communication means adapted to transmit signals to the processor, said signals may further comprise distance inspection signals acquired by the at least one distance sensor.

The shuttle can further comprise one distance sensor. Preferably, the shuttle further comprises more than one distance sensors. Preferably, the distance sensor can be adapted to determine the shuttle's distance relative to the racking frame. Optionally, the distance sensor can also determine the shuttle's distance relative to any other substance co-existing in the automated storage, such as for example human operator(s), goods, other shuttle(s), or any other substance being located in the shuttle's environment. The shuttle's environment comprises the environment next to the shuttles, above and/or below the shuttle.

It is advantageous that the shuttle comprises at least one distance sensor to ensure that the shuttle can operate autonomously even in relatively complex circumstances. The automated storage may comprise a multi-depth and layered racking frame, wherein the racks in the racking frame can be horizontal and/or have ramps. Moreover, the racking frame may have structural abnormalities, misalignment, deflections, debris, and/or any other complex circumstance. Taking the above into account, this improvement allows the shuttle to safely and precisely traverse the racks in the racking frame while avoiding collisions. Collisions may cause further damage to the racking frame, to the stored goods, and/or the human operators working in the automated storage, which largely impairs the operation of the automated storage. Moreover, this improvement facilitates collaboration between human workers and the shuttles to complete tasks in the automated storage. Introducing shuttles contributes to reducing errors and improving productivity of the automated storage's operations. However, human labor is often still indispensable in the automated storage. Having shuttles equipped with at least one distance sensor offers a higher level of safety by taking into account proximity of the human workers.

The distance inspection signals are transmitted to the processor together with the visual inspection signal and/or movement parameter signals and/or ambient condition signals. As an additional sensing, the distance inspection signals offer one extra data source to match against the other signals as disclosed in the first aspect of the disclosure, thereby further enhancing the shuttles' performance being consistent and accurate over time.

According to some embodiments, the at least one transmission means can be adapted to transmit the processed signals to control the shuttle's movement and to communicate with one or more external systems within the automated storage.

Preferably, the at least one transmission means can transmit the processed signals to control the shuttle's movement and to communicate with one or more external system. It is advantageous that the shuttle can adapt and calibrate its movement according to the shuttle's environment, follow commands of a higher level external control and send feedback to the higher level external control. Moreover, the feedback sent to the higher level external control can contribute to overall management of the shuttles in the automated storage, to the timely maintenance of the automated storage and to a higher efficiency of the human operator. More specifically, notifications can be sent to the human operator in the form of warnings, errors, automated reports, and/or any other suitable format, thereby allowing for instant assessment of the status of automated storage and identification of critical issues in automated storage. Furthermore, each shuttle in the automated storage may transmit data to a central monitoring system, thereby enabling mission planning and management, as well as real-time updates of the automated storage maintenance plan. Preferably, the shuttle would log data regularly, creating a defect history that helps with predictive maintenance, ensuring that repairs are proactively performed before failures occur.

According to some embodiments, the processor can be configured to receive and process the signals transmitted by at least one of the one or more communication means to generate processed signals, and refine and adjust the visual inspection signals based on the motion inspection signals and the environment inspection signals to generate processed signals.

It is advantageous to refine and adjust the visual inspection signals based on the motion inspection signals and the environment inspection signals. This improvement ensures that the processed signals, such as for example the processed images of the shuttle's environment, can more accurately reflect the shuttle's environment, even in a relatively complex automated storage's environment, considering, such as for example vibrations and/or fluctuating lighting, temperature, humidity and/or any other environmental condition when the shuttles move through the racking frame. Moreover, this improvement contributes to better identifying anomalies in the automated storage, such as for example structural abnormalities, debris, loose or missing fasteners, and/or any other possible anomaly. The refined and adjusted visual inspection signals can to a large extent eliminate the negative impact of the shuttle's motion and/or the automate storage's environment on the quality of the visual inspection signal. In addition, the cross-referencing of signals from multiple sensors as disclosed in the present disclosure ensures that the shuttle can maintain consistency even under fluctuating environmental conditions, which largely improves the efficiency and reliability of the automated storage and reduces possible safety-related risks.

According to some embodiments, the shuttle may further comprise a housing adapted to accommodate the plurality of components, wherein the housing may comprise a plurality of lateral sides, a top side and a bottom side; wherein the at least one visual inspection means can be positioned at at least one of the plurality of lateral sides, the top side, the bottom side and/or inside the housing.

Preferably, the housing can be waterproof, dustproof, and/or watertight. Preferably, the housing has a certain level of mechanical strength to maintain intact in front of the possible damages that may happen in the automated storage, such as for example collision with other shuttle, collision with the human operator, collision with the racking frame, falling off the racking frame from a height, hit by falling goods, and/or any other possible situation. The housing may be made of thermally conductive material to dissipate waste heat during extended use. The housing can be adapted to accommodate the plurality of components as disclosed in the first aspect of the disclosure, comprising:
- at least one visual inspection means adapted to acquire images of the shuttle's environment;
- one or more motion measurement means adapted to detect movement parameters of the shuttle;
- at least one ambient sensor adapted to detect ambient conditions of the shuttle;
- a processor operatively connected to the at least one visual inspection means, the one or more motion measurement means and the at least one ambient sensor;
- one or more communication means adapted to transmit signals to the processor, the signals comprising:
   o visual inspection signals acquired by the at least one visual inspection means; and/or
   o movement parameter signals acquired by the one or more motion measurement means; and/or
   o ambient condition signals acquired by the at least one ambient sensor; wherein
- the processor is configured to receive and process the signals transmitted by at least one of the one or more communication means to generate processed signals; and
- at least one transmission means adapted to transmit the processed signals to control the shuttle's movement and/or to communicate with one or more external systems within the automated storage.

The housing can be adapted to accommodate at least the plurality of components as disclosed in the first aspect of the disclosure. The housing may further accommodate at least one distance sensor adapted to determine the shuttle's distance relative to the racking frame, driving means adapted to move the shuttle in the racking frame of the automated storage, cleaning means adapted to remove foreign material and foreign objects from the racking frame while moving through the racking frame, position means adapted to determine a location and/or an orientation of the shuttle referring to a standard geodetic system, and/or any other suitable means for the shuttle adapted to move in the automated storage comprising a racking frame.

The housing may comprise a plurality of lateral sides, a top side, and a bottom side. The housing may have a shape of a three-sided prism, or a four-sided prism like a cuboid or cube-like prism, or a cylinder, or any other suitable shape. Preferably, the housing has a shape of a cuboid, such as for example a square cuboid, more preferably, a height of the square cuboid is smaller than a length/width of the square cuboid. The housing has therefore four lateral sides, a top sides and a bottom side. The interfaces between two adjacent lateral sides and/or between the lateral sides and the top side and/or the lateral sides and the bottom sides can be rounded.

The at least one visual inspection means is positioned at at least one of the plurality of lateral sides, the top side, the bottom side and/or inside the housing. Preferably, the at least one visual inspection means is positioned at the plurality of lateral sides, the top side, the bottom side and inside the housing. It is advantageous to position the at least one visual inspection means at a plurality of positions all over the shuttle, thereby providing a complete 360-degree inspection capability within the racking frame. This improvement enables them to detect anomalies around the shuttle, above the shuttle, and/or even behind the shuttle, which enables a more thorough detection of structural issues in all critical areas, comprising those that are otherwise inaccessible or difficult to reach.

According to some embodiments, the at least one distance sensor may be positioned at at least one of the plurality of lateral sides, the top side, the bottom side and/or inside the housing.

It is advantageous to position the at least one distance sensor at a plurality of positions. This improvement ensures that the shuttle can at least keep a safe distance with the other shuttles, the racking frame, the goods, the human operator, and/or any other obstacles being present in the automated storage.

In one preferred set of embodiments, the faster the shuttle moves in one direction, the larger the detection range of the shuttle becomes. Therefore, even the smallest obstacle that comes close to the shuttle may trigger an emergency stop. By combining at least one visual inspection means and at least one distance sensor, such as for example combining safety cameras and Light Detection and Ranging units, the shuttle can navigate complex routes that can be far too narrow for alternatives, such as for example automated guided vehicles, AGVs, thereby having a better perception of the shuttle's environment. Preferably, the shuttle analyses its environment in real time to avoid obstacles and/or even overtake slower vehicles. In one example embodiment, two 3D cameras provide three-dimensional perception with a wide field of view and volumetric detection of objects even at great distances.

In one preferred set of embodiments, when the shuttle interacts with the human operator, navigation modes of the shuttle can consider the proximity of the human operator, thereby ensuring a safe working environment when the shuttle collaborating with the human operators. Preferably, the shuttle can be designed to be symmetrical, such as for example 100% symmetrical, and the shuttle can navigate in both directions. This improvement avoids to a large extent time-consuming manoeuvers.

According to some embodiments, the at least one visual inspection means can be adapted to detect one or more of the following:
- foreign material and foreign objects in the racking frame in which the shuttle moves;
- abnormalities on parts of the racking frame in which the shuttle moves;
- deviating dimension of the parts of the racking frame in which the shuttle moves;
- deviating orientation of the parts of the racking frame in which the shuttle moves.

In the current disclosure, the foreign material, and foreign objects in the racking frame in which the shuttle moves may comprise at least loose or missing fasteners, corrosion, surface fatigue, debris, unexpected obstacles, and/or any other possible foreign material and foreign object. In the current disclosure, abnormalities on parts of the racking frame in which the shuttle moves may comprise dents, holes, rust, peeling paints, cracks, and alike. In the current disclosure, deviating dimensions of the parts of the racking frame in which the shuttle moves may comprise deformations, loosened or missing blots, and alike. In the current disclosure, deviating orientation of the parts of the racking frame in which the shuttle moves may comprise broken welds and deformations of the beams, tracks, and alike. The at least one visual inspection means may use features like obstacle detection such as for example detect object in the racking frame, such as for example screws, nut or bolts and alike or stain detection, such as for example to detect and recognize the type of the stain and size, such as for example in order to determine the means of cleaning to be used to remove the stain.

Alternatively, or additionally, the shuttle may comprise other sensors to identify anomalies, like line scanners, distance sensors, tactile sensors, and alike.

According to some embodiments, the at least one visual inspection means may comprise one or more of the following:
- one or more cameras;
- one or more stereo cameras;
- one or more infrared cameras.

In this disclosure, cameras mainly refer to an instrument used to capture and store images and videos, either digitally via an electronic image sensor, or chemically via a light-sensitive material such as photographic film. In this disclosure, stereo cameras mainly refer to a type of camera with two or more lenses with a separate image sensor or film frame for each lens. Therefore, the stereo cameras can capture three-dimensional images through a process known as stereo photography. In this disclosure, infrared cameras mainly refer to thermal cameras which captures and creates an image of an object by using infrared radiation emitted from the object in a process. Infrared cameras make the shuttle possible to detect the shuttle's environment with or without visible illumination.

According to some embodiments, the one or more motion inspection means may comprise one or more of the following:
- one or more inertial measurement units, IMU's;
- one or more accelerometers.

In this disclosure, inertial measurement unit mainly refers to an electronic device that measures and reports the shuttle's specific force, angular rate, and/or orientation of the shuttle, using a combination of accelerometers, gyroscopes, and/or magnetometers. The accelerometers measure the shuttle's acceleration in different directions, enabling the shuttle to identify movement, tilt, and vibration. The gyroscopes detect the rate of rotation around an axis, facilitating the shuttle to maintain balance and stability. The magnetometers sense the Earth's magnetic field, providing the shuttle with directional information for navigation purposes. Therefore, IMU can contribute to maintaining the shuttle's balance and orientation during movement, enabling tasks like autonomous navigation; to precise tracking and controlling motion; and/or to dead reckoning, thus estimating the shuttle's position based on the shuttle's previous movements and sensor data. In this disclosure, the accelerometer mainly refers to a device that measures a proper acceleration of the shuttle. Proper acceleration is an acceleration, i.e., the rate of change of velocity, of the shuttle relative to an observer who is in free fall, i.e., relative to an inertial frame of reference. Proper acceleration can be different from coordinate acceleration, which is acceleration with respect to a given coordinate system, which may or may not be accelerating.

According to some embodiments, the at least one ambient sensor may comprise one or more of the following:
- one or more temperature sensors;
- one or more luminosity sensors;
- one or more humidity sensors.

In this disclosure, temperature sensors mainly refer to devices that convert temperature changes into electrical signals, possibly using different principles such as for example thermistors or resistance temperature detectors, RTDs, or any other suitable principle. Temperature sensors may help the shuttle monitor ambient temperature for calibrating and/or adjusting the visual inspection signals, and/or preventing overheating. In this disclosure, luminosity sensors can be photoresistors, photodiodes, phototransistors, and/or any other suitable luminosity sensor. The luminosity sensors may contribute to obstacle avoidance, in the sense that obstacles cause light intensity changes, thereby enabling the shuttle to navigate safely and to avoid collisions. The luminosity sensors may further contribute to line following, wherein by following a line with contrasting light reflectance, robots can navigate along specific paths in the automated storage. Moreover, the luminosity sensors may enable the shuttle to monitor light level. The luminosity sensors can be used to measure ambient light conditions and trigger actions accordingly, such as turning on lights in low-light conditions or adjusting camera settings for optimal image capture. Furthermore, the luminosity sensors can be used to distinguish objects based on the objects' reflective properties, thereby aiding in identifying racking defects and/or foreign objects. Preferably, signals from the luminosity sensors can be used to refine and adjust the visual inspection signals considering the fluctuating environmental conditions in the automated storage.

According to some embodiments, the at least one distance sensor may comprise one or more of the following:
- one or more light detection and ranging sensors, LiDAR sensors;
- one or more ultrasonic sensors;
- one or more proximity sensors.

In this disclosure, light detection and ranging sensor, LiDAR sensor, mainly refers to a remote sensing method that uses light in the form of a pulsed laser to measure ranges, which can be variable distances, to the shuttle. The ranges can be determined by targeting an object or a surface with a laser and measuring the time for the reflected light to return to the receiver. Signals from the LiDAR sensor can generate precise, three-dimensional information about a shape of an object and the object's surface characteristics. The LiDAR sensor may be provided in a form of a LiDAR instrument. The LiDAR instrument may comprise a laser, a scanner, and a specialized global positioning system, GPS receiver. In this disclosure, ultrasonic sensor mainly refers to a device which generates sound waves, preferably high-frequency sound waves, and evaluate an echo which is received back by the ultrasonic sensor. The ultrasonic sensors can be used to detect the presence of targets and to measure a distance to the targets. In this disclosure, proximity sensor mainly refers to a device which uses an electromagnetic field or a beam of electromagnetic radiation, such as for example infrared radiation, to detect a presence of nearby objects without any physical contact, by analyzing changes in the field or return signal. The proximity sensor can be a capacitive proximity sensor and/or a photoelectric sensor, which can be suitable for a plastic target. Alternatively, the proximity sensor can be an inductive proximity sensor which is suitable for a metal target. Alternatively, the proximity sensor can be one or more capacitive proximity sensors, photoelectric sensors, and/or inductive proximity sensors.

According to some embodiments, the shuttle may comprise a driving means to move the shuttle in the racking frame of the automated storage.

The shuttle may comprise at least a first and a second set of wheels. These sets are typically located on opposite lateral sides of the shuttle. The first set of wheels is positioned on one lateral side, and the second set is on the opposite lateral side. Additionally, the shuttle may also comprise a third set of wheels and/or a fourth set of wheels, which are positioned along the third lateral side and/or the fourth lateral side of the shuttle, respectively. Alternatively, the third and/or fourth set of wheels can be placed along the third and/or fourth lateral sides of the shuttle, in addition to the first and second sets. The shuttle may also incorporate other forms of locomotion besides rolling wheels to move from place to place.

To move in two perpendicular directions, the shuttle can use the first and second sets of wheels to move in one direction, while using the third and fourth sets of wheels to move in the other direction. Typically, the first lateral side and the second lateral side are opposite each other, allowing the first and second sets of wheels to move the shuttle in a shared direction, referred to as a first direction. Similarly, the third and fourth lateral sides are opposite each other, enabling the third and fourth sets of wheels to move the shuttle in a second direction, which is typically perpendicular to the first direction or at some angle to it.

When the first and second sets of wheels are in contact with the ground, rail, and/or track in the automated storage, the third and fourth sets of wheels are typically not in contact with the ground, rail, and/or track. In this scenario, the third and fourth sets of wheels are raised by a secondary driving mechanism, which is primarily housed within the shuttle. Conversely, when the third and fourth sets of wheels are in contact with the ground, rail, and/or track, the first and second sets of wheels are lifted off the ground and are not in contact.

According to some embodiments, the shuttle may further comprise a cleaning means to remove foreign material and foreign objects from the racking frame while moving through the racking frame.

It is advantageous to equipe the shuttle with the cleaning means on board, which can effectively reduce the number of interventions of the human operator in the racking frame, in order to clean the racking frame and/or remove foreign objects and foreign material from the racking frame. The shuttle equipped with the cleaning means has the advantage in noticing and removing foreign objects from the racking frame at a much earlier point in time, because the shuttle may pass through the whole racking frame more regularly. Therefore, the wear or damage in the racking frame due to the presence of foreign objects, such as for example dirt, can be effectively reduced, thereby limiting the intervention time to clean the racking frame. Moreover, this improvement ensures more streamlined operations in the automated storage, leading to desired outcomes. Furthermore, the foreign objects, such as for example the dirt, being present in the racking frame may also cause the shuttle itself to malfunction, which can negatively impact the shuttle's overall performance and the performance of the automated storage. Overall, this improvement ensures a comprehensive cleaning process, which is important for maintaining the optimal functionality of the shuttle and the automated storage.

According to some embodiments, the cleaning means may comprise one or more of the following:
- at least one brush;
- at least one vacuum cleaning means;
- at least one blowing means;
- at least one magnet;
- at least one spray device adapted to spray a fluid, such as a liquid;
- at least one absorption means adapted to absorb a liquid.

The shuttle preferably comprises at least a first brush and a second brush. The shuttle preferably comprises at least a first brush and a second brush, the first brush being positioned along the first lateral side of the shuttle and the second brush being positioned along the second lateral side of the shuttle. Preferably, the brushes are positioned symmetrically to each other at least to ensure a balanced cleaning along the movement of the shuttle in the racking frame and/or in the automated storage. The first brush can be positioned along the third lateral side of the shuttle or the fourth lateral side of the shuttle, while the second brush can be positioned opposite to the first brush along the fourth lateral side of the shuttle or the third lateral side of the shuttle. The brushes may be positioned near one of the traverse sides of the shuttle and/or at least between one of a front traverse side or a back traverse side, and the first set of wheels can be positioned along the same lateral side in a direction from one of the front traverse side or the back traverse side to the other of the front traverse side or the back traverse side of the shuttle. The brush may be positioned and may even extend along one of the lateral sides of the shuttle. Two brushes may be positioned and may even extend along one of the lateral sides of the shuttle, one brush at each of the lateral sides of the shuttle.

Optionally, the shuttle may comprise two, three, four or even more brushes, which brushes may be similar, identical or mutually different. The brush or in case more than one brush, the brushes, may be adapted to brush rails of the racking frame on which the shuttle is moving in the racking frame. Optionally, the brush or the brushes may be interchangeable, adaptable to the severity of stains in the racking frame. The interchangeable brushes may range from soft to hard, may be available in various sizes, shapes, and forms. Optionally, the shuttle may have a capability to navigate outside of the racking frame. In such cases, the shuttle extends its cleaning function to cover the proximity, such as for example the close proximity of the racking frame.

The brushes may be rotating brushes. The brushes may rotate towards a lower side of the shuttle. An axis of rotation may be such as for example substantially perpendicular to a lower surface of the shuttle. The bristles of the brush, optionally provided as tufts, may be oriented in the axial direction downwards in view of the shuttle, and/or radially extending outwards. The brushes being in contact with the rails of the racking frame, may as such clean a support surface of the rails, and/or side walls of the racking frame, such as for example the side walls of the rails of the racking frame. Both rotations in both directions may brush dust and particles towards the shuttle. The axis of rotation may be such as for example substantially parallel to the lateral sides and/or the lower surface of the shuttle. The brushes may be tubular brushes, also called tube brushes, the bristles of the brush, optionally provided as tufts, being oriented in radial direction, which is being perpendicularly to the axis. The brushes being in contact with the rails of the racking frame, may as such clean the support surface of the rails, and the side walls of the racking frame, such as for example the side walls of the rails of the racking frame. Preferably, a direction of rotation is chosen such that in a lower half of the brush, when being sectioned parallel to the axis of rotation, the bristles rotate towards the shuttle.

Preferably, the shuttle comprises at least one vacuum cleaning means. The vacuum cleaning means may comprise at least a first inlet nozzle. Alternatively, the vacuum cleaning means may comprise at least a first inlet nozzle and a second inlet nozzle, the first inlet nozzle being positioned along the first lateral side of the shuttle, the second inlet nozzle being positioned along a second lateral side of the shuttle.

The inlet nozzles may preferably be positioned near one of the traverse sides of the shuttle and/or at least between one of the front traverse side or the back traverse side and the first set of wheels being positioned along the same lateral side in a direction from the one of the front traverse side or the back traverse side to the other of the front traverse side or the back traverse side of the shuttle.

When the cleaning means comprises at least one vacuum cleaning means with two inlet nozzles and a first brush and a second brush, the first brush and the first inlet nozzle being positioned along the first lateral side of the shuttle, the second brush and the second inlet nozzle being positioned along the second lateral side of the shuttle, the inlet nozzles may preferably be positioned between the brush and the first set of wheels at said lateral side in a sense from the closest of the front traverse side or the back traverse side to the other of the front traverse side or the back traverse side of the shuttle.

The inlet nozzle or in case more than one inlet nozzles, the inlet nozzles, may be adapted to such particles and matter from the rails of the racking frame on which the shuttle is moving in the racking frame.

The shuttle may further comprise at least one air blowing means, preferably a compressed air blowing means, most preferably, a high pressure air blowing means. The air blowing means preferably blows compressed air at a pressure of up to 15 bar, like a pressure of 1 to 12 bar, such as for example 10 bar. The shuttle may have a container of compressed air on board, and/or may comprise a compressor to create compressed air instantaneously. The cleaning means may comprise such air blowing means, the air blowing means comprising at least a first blowing nozzle. The air blowing means may comprise at least a first blowing nozzle and a second blowing nozzle, the first blowing nozzle being positioned along the first lateral side of the shuttle, the second blowing nozzle being positioned along a second lateral side of the shuttle.

The blowing nozzles may preferably be positioned near one of the traverse sides of the shuttle and/or at least between one of the front traverse side and the back traverse side. Additionally, the nozzles are placed along the same side as the first set of wheels, extending in the direction from either the front traverse side or the back traverse side of the shuttle to the opposite side.

The air blowing nozzles and the inlet nozzles may be so positioned that the air blowing nozzles, in essence, ejects an air stream in a direction towards the inlet nozzle. As such a more efficient use of air, such as for example compressed air, may be achieved, and a more reliable trapping of foreign objects, such as for example dust and alike can be obtained.

When at each lateral side, a set of wheels, a blowing nozzle, an inlet nozzle, and a brush are provided, the sequence of elements in a direction and sense from one of the front traverse side or the back traverse side to the other of the front traverse side or the back traverse side of the shuttle, is traverse side, brush, blowing nozzle, inlet nozzle and the first set of wheels. It is understandable that the arrangement order of the above components can be different as long as the targeted functions are realized.

The blowing nozzle or in case more than one blowing nozzle, the blowing nozzles, may be adapted to blow particles and matter from the rails of the racking frame on which the shuttle is moving in the racking frame.

Hence, in preferred embodiments, the cleaning means is adapted to at least clean the tracks of the racking frame by brushing, sucking of matter and particles and/or blowing matter and particles from the rails of the racking frame. As such the racking frame can be kept clean, thereby preventing dirt and foreign material to hinder the movement of the shuttles in the racking system, and even prevent damage to either the racking frame and/or shuttles passing over the dirt or foreign objects, such as for example excessive wear of the wheels on which the shuttle travels.

The cleaning means may comprise at least a magnet, preferably a permanent magnet or an activatable magnet such as an electromagnet. The magnet may be oriented towards the rails of the racking frame to be treated. The magnets may attract metallic particles, like loosened bolts or nuts, parts of the racking frame being separated from the racking frame, and alike.

The cleaning means may comprise at least a spraying device adapted to spray a fluid, like a liquid. Optionally, this cleaning means may further comprise at least an absorption means adapted to absorb a liquid. The sprayed liquid may be water or a solvent, and may optionally comprise emulsifiers, like soaps and alike. The solvent preferably is a solvent adapted to dissolve grease and/or oils. Optionally, the sprayed liquid, also referred to as cleaning liquid, may be an evaporative cleaning liquid, drying relatively quickly after being applied or used. The spraying device may spray its liquid to sticky foreign material, like grease or oil stains in order to dilute and/or dissolve the sticky foreign material. The shuttle further comprising an absorption means may thereafter absorb the sprayed liquid, comprising the dissolved and/or diluted foreign material.

Optionally, the spraying device and the absorption means may be activatable, i.e., may be shut on and off for the spraying device and brought from a first position where the absorption means is in contact with the racking frame to a second position wherein the absorption means is free of contact with the racking frame. Optionally, the shuttle may spray a liquid when passing for a first time along a location in the racking frame where the sticky foreign material, like oil or grease stains, are present, and may absorb the resulting liquid when passing a second time this sprayed location in the racking frame. Optionally, the sprayed liquid may be an evaporative cleaning liquid, drying relatively quickly after being applied or used.

The shuttle may receive a signal to activate or deactivate the cleaning means upon recognition of a presence of foreign objects and/or foreign material. The shuttle may even activate or deactivate parts of the cleaning means depending on the type of the identified foreign material and/or foreign objects. Alternatively, the shuttle may receive signals from the processor to activate or deactivate the cleaning means upon recognition of a presence of foreign objects and/or foreign material. The shuttle may even activate or deactivate parts of the cleaning means depending on the type of the identified foreign material and/or foreign objects.

Preferably, the shuttle passes over each of the rails of the racking frame at regular time intervals. A plurality of shuttles may be used, for each of the rails of the racking frame, at least one of the plurality of shuttles passes said rail at regular time intervals. Preferably, at least one of the shuttles in the automated storage can be conducted to a position in the racking frame where an accident takes place. Accidents may be collisions of two or more shuttles, a crash or standstill of one or more shuttles, a breakage of one or more of the rails of the racking frame, a loss of payload by a shuttle, a leakage or spill of goods stored in the racking frame of the automated storage, and/or any other possible accident happening in the automated storage.

According to some embodiments, the shuttle may further comprise a positioning means, wherein the positioning means can be adapted to determine a location and/or an orientation of the shuttle referring to a standard geodetic system.

The positioning means can be GPS-like technology used for indoor environments. Preferably, the positioning means is adapted to determine a location and an orientation of the shuttle referring to a standard geodetic system. Therefore, the location and/or the orientation of the shuttle can be sent to the one or more external systems within the automated storage. This improvement contributes to at least more efficient assignments of tasks to the shuttles and better monitoring over the shuttles' statuses. GPS-like technology, such as for example GPS technology, enables the shuttle to navigate large and complex fields with precision, which ensures that the shuttle can cover vast areas systematically and return to specific locations as needed. Therefore, preferably, the shuttle operates autonomously using a combination of LiDAR, ultrasonic sensors, and GPS-like technology used for indoor environments, allowing it to traverse the rails while avoiding collisions.

It is clear that the features of one aspect of the present disclosure may be combined with one or more, even all the features of any or all other aspect of the disclosure.

### Brief Description of the Drawings

Some example embodiments will now be described with reference to the accompanying drawings.
Fig. 1 illustrates schematically a top view of a square like-shaped shuttle according to the disclosure.
Fig. 2 illustrates schematically a front side of the square like-shaped shuttle according to the disclosure.
Fig. 3 illustrates schematically a lateral side of the square like-shaped shuttle according to the disclosure.
Fig. 4 illustrates schematically the lateral side of the square like-shaped shuttle with illustrated wide fields of detection according to the disclosure.
Fig. 5 illustrates schematically the lateral side of the square like-shaped shuttle in a racking frame of an automated storage.
Fig. 6 illustrates schematically a perspective view of the square like-shaped shuttle in the racking frame of the automated storage.
In the different figures, the same reference sign refers to the same or a similar feature.

### Detailed Description of Embodiment(s)

Axes 1100 and 1200 are orthogonal to each other and indicate the directions from which a shuttle 1000 according to the present disclosure moves. Axis 1100 is the lateral direction along which the shuttle 1000 moves, and axis 1200 is the longitudinal direction along which the shuttle 1000 moves.

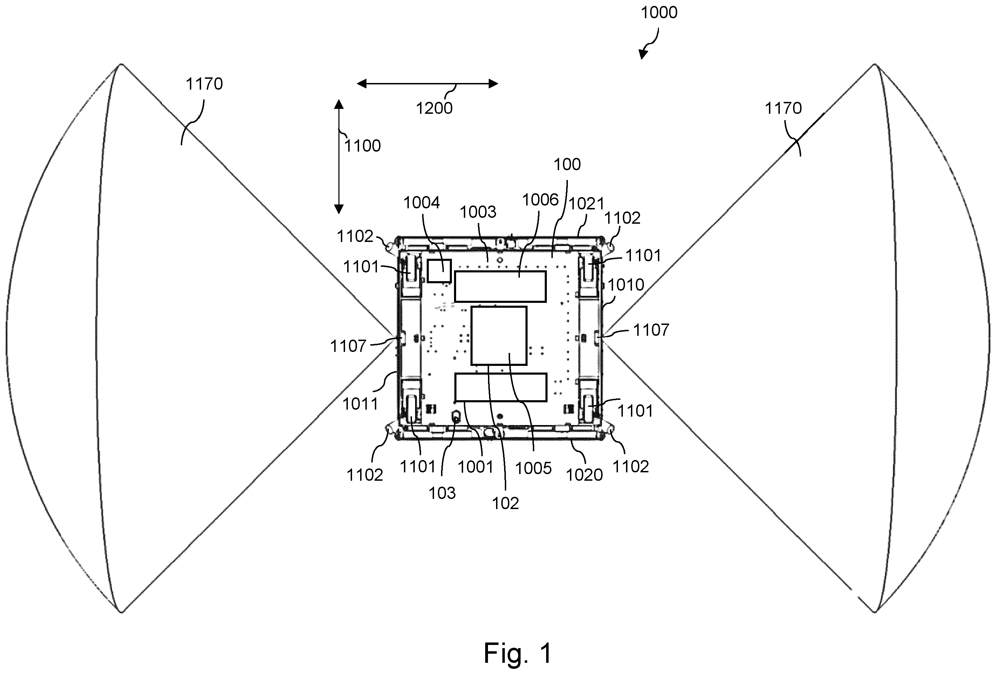

A shuttle 1000 which is adapted to detect anomalies in or to a racking frame 2000 of an automated storage, and which is optionally adapted to clean a racking frame 2000, is shown in the Fig. 1-6.

Fig. 1 illustrates an example embodiment of a shuttle 1000 according to the present disclosure. Fig. 1 illustrates schematically a top view of a square like-shaped shuttle 1000 according to the disclosure. It is understandable that the shuttle 1000 can have different shapes and/or different sizes from the shuttle 1000 as illustrated in Fig. 1. It is also understandable that a plurality of components comprised by the shuttle 1000 can be positioned at different positions as illustrated in Fig. 1. As shown in Fig. 1, the square like-shaped shuttle 1000 has a plurality of lateral sides 1010, 1011, 1020 and 1021, a top side 1003 and a bottom side 1007. For convenience of illustration, 1020 and 1021 are referred to as lateral sides, 1010 is referred to as a front side, and 1011 is referred to as a back side. Obviously, the size of the shuttle 1000 may be chosen in function of the racking frame 2000 where the shuttle 1000 is to operate.

As illustrated in Fig. 1, on the top side 1003 of the shuttle 1000, the shuttle 1000 comprises communication means 1004, a 360° camera 1005 as visual inspection means, vacuum cleaning means 1006, wheels 1101 as driving means, and a compressor 1001. It is understandable that the compressor 1001 can alternatively be a pressure vessel. In one example embodiment, the distance sensor 106 is positioned adjacent to the 360° camera 1005, thereby enabling distance sensing relative to the racking frame and any other obstacle in the automated storage in a complete 360-degree manner. Preferably, the motion measurement means 102 and the processor 104 are positioned inside the housing 100 of the shuttle 1000. Optionally, one ambient sensor 103 is positioned on the top side 1003 of the shuttle 1000. Alternatively, the motion measurement means 102, ambient sensor 103, transmission means 105, and/or distance sensor 106 may be mounted in front, oriented towards the front to detect obstacles and/or measure distance to the endstop of the track.

The front side 1010 and the back side 1011 are further provided with a wide angle camera 1107, respectively, adapted to make images from a wide field 1170 in front of the front side 1010 and the back side 1011, as illustrated in Fig. 1. The images taken by the wide angle cameras 1107, being part of the visual inspection means of the shuttle 1000, may be used to detect anomalies on parts of a racking frame and/or deviating dimension of the parts of the racking frame 2000. To achieve this, the images may be communicated by communication means 1004 on board to one or more external systems being on a remote position in or near the racking frame 2000, optionally being part of the racking frame management system. This one or more external systems may provide feedback to the shuttle 1000 and may control movement or actions taken by the shuttle 1000. These wide angle cameras 1107 may as well detect dirt or waste in or on the racking frame, and in a similar way, the shuttle 1000 may communicate this anomality and optionally even take appropriate actions.

Each of the front side 1010 and the back side 1011 is further provided with two blowing means 1102, respectively. The blowing means 1102 are positioned at each corner on the front side 1010 and the back side 1011 of the shuttle 1000. The blowing means 1102 point diagonally away from the shuttle 1000.

The blowing means 1102 may be used as blowing tubes for blowing compressed air provided by a compressor or a pressure vessel 1001. The air blown through these blowing means 1102 may blow dust or stain from rails of the racking frame. The dust or stain is blown sideways towards the lateral sides 1020 and 1021. Alternatively, the blowing means 1102 may be used as suction tubes for sucking ambient air, dust, and stain to a vacuum cleaning means 1006.

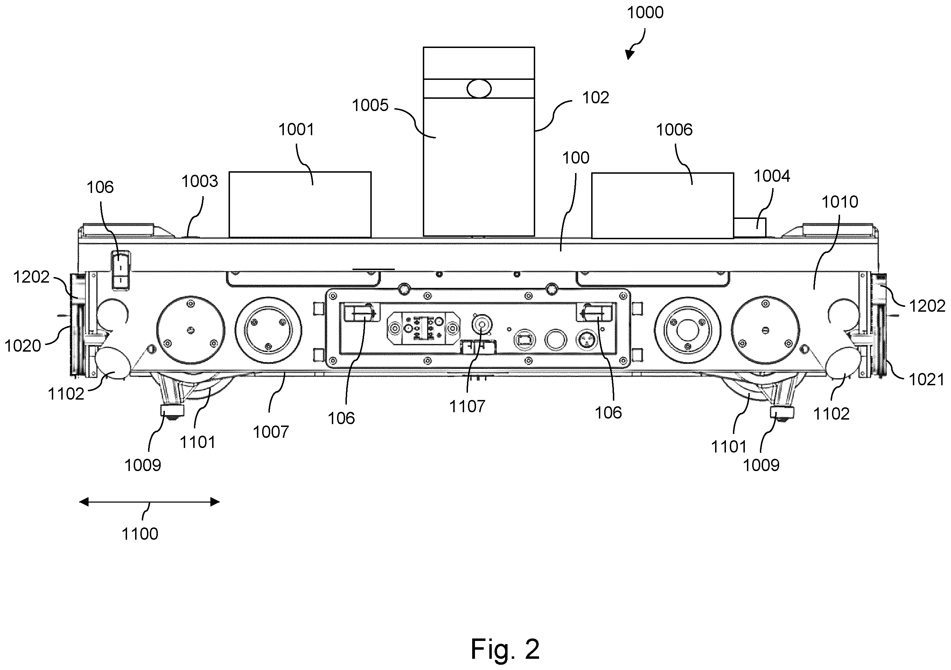

Figure 2 illustrates schematically a front side 1010 of the square like-shaped shuttle 1000 according to the disclosure. Components having identical reference numbers than on Fig. 1 fulfil the same function. The back side 1011 is at least equipped with the same features as will be described hereinafter. The front side 1010 has a pair of wheels to move the shuttle on the racking frame in lateral direction 1100. For convenience of illustrating a front view of the front side 1010, the wheels on the front side 1010 are not shown, whereas the wheels 1101 on the opposite back side 1011 are drawn.

The front side 1010 is further provided with two distance sensors 106, which together detect obstacles on the rails of the racking frame due to their diagonal scanning direction. Possibly, a crossed laserbeam is used. Preferably, some of the distance sensors 106 can be crossed laserbeams. The detector of one of the distance sensors 106 is located closest to a left edge of the front side 1010 and is oriented hence scans towards a right edge of the front side 1010. In addition, the detector of a second distance sensor 106 is located closest to the right edge of the front side 1010 and is oriented hence scans towards the left side of the front side 1010. These two distance sensors 106 can emit laser beam and work collaboratively to detect distance and obstacles. As such a complete scanning zone with a wide field 1170 in front of the shuttle 1000 is scanned, hence obstacles may be detected. The movement of the shuttle 1000 may be interrupted when an obstacle is detected in this scanning zone 1170. On the bottom side 1007 of the shuttle 1000, guiding pins and rollers 1009 are shown.

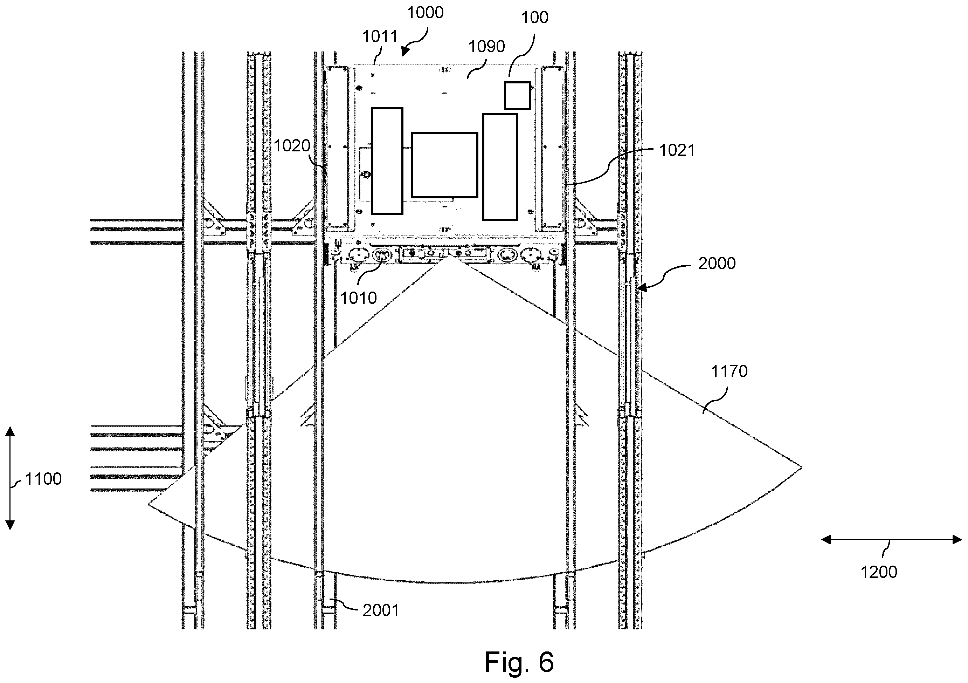

Optionally, additionally, or alternatively for the wide angle camera 1107, the shuttle 1000 may be provided with a 360° camera 1005 carried on the top side 1003 of the shuttle 1000. This 360° camera 1005, being part of the visual inspection means 101 of the shuttle 1000, may take images which can be used to detect anomalies on parts of the racking frame 2000 and/or deviating dimension of the parts of the racking frame 2000. The images may be communicated by communication means 1004 on board to one or more external systems being on a remote position in or near the racking frame 2000, optionally being part of the racking frame management system. This one or more external systems may provide feedback to the shuttle 1000 and may control movement or actions taken by the shuttle 1000. These cameras 1107 and 1005 may as well detect dirt or waste in or on the racking frame, and in a similar way, the shuttle 1000 may communicate this anomality and optionally even take appropriate actions. The communication means 1004 and/or the transmission means 105 and/or the processor 104 may alternatively be housed inside the shuttle 1000 to shield it/them from the external environment, in particularly in case of fragile communication means 1004 and/or the transmission means 105, being susceptibility to noise. The communication means 1004 and/or the transmission means 105 and/or the processor 104 may be housed in the shuttle 1000 and is reachable through a removable cap frame 1090, as illustrated in Fig. 6, even beneath the shuttle's chassis 1000 like other electronics for the control and drive systems of the shuttle 1000. Brushes 1202 are located at the lateral sides 1020 and 1021 of the shuttle 1000.

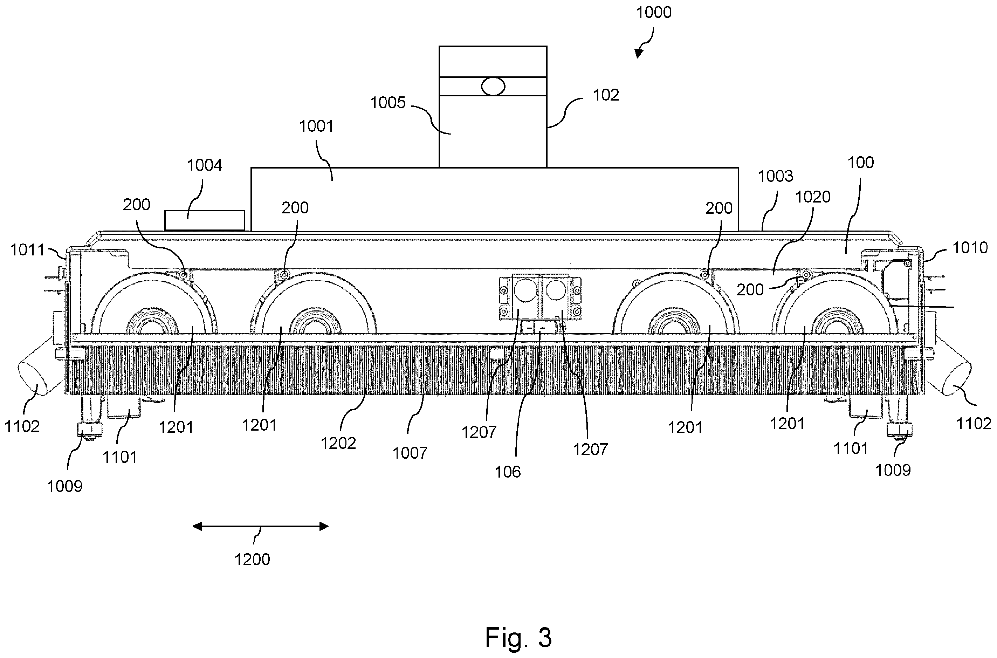

Fig. 3 illustrates schematically a lateral side 1020 of the square like-shaped shuttle 1000 according to the disclosure. Components having identical reference numbers than on Fig. 1 or Fig. 2 fulfil the same function. Each of the lateral sides 1020 and 1021 also comprises a quartet of wheels 1201 to move the shuttle 1000 in the longitudinal direction 1200. The lateral sides 1020 and 1021 are provided with a brush 1202, respectively, which optionally may be a rotating brush, rotating around an axis parallel to the lateral side 1020 and 1021. The brush 1202 cleans the dirt, stain and objects present on the rails on which the wheels 1201 move in the racking frame 2000. Optionally the brushes 1202 may be interchangeable, adaptable to the severity of stains in the racking frame. The interchangeable brushes 1202 may range from soft to hard, and may be available in various sizes, shapes, and forms. Dust or particles may be blown to the lateral side 1020 or 1021, respectively, by the tubular means 1102. Along the brush 1202 (not shown, at the lower side of the shuttle 1000, suction holes may be provided, to suck the dust and particles brushed by the brush 1202 into a container of the vacuum cleaning means 1006. Similarly, as the front side 1010 and the back side 1011, the lateral sides 1020 and 1021 may be provided with identical or similar distance sensors 106 and wide angle cameras 1207, to make the same observations when the shuttle moves in the longitudinal direction 1200 in the racking frame 2000. The corresponding distance sensor or sensors 106 may be used to count the number of encoded lines available on the rack, e.g. in order to measure running distances. As an example, the corresponding distance sensor or sensors 106 can point a laser beam along the lateral direction 1100 to the racking frame 2000. By counting the marks on the racking frame 2000 that the shuttle 1000 passes as it moves along the longitudinal direction 1200, a moving distance of the shuttle 1000 along its moving direction can be identified.

Hence the shuttle 1000 comprises the visual inspection means comprising the 360° camera 1005, the wide angle cameras 1107 and 1207 may be part of.

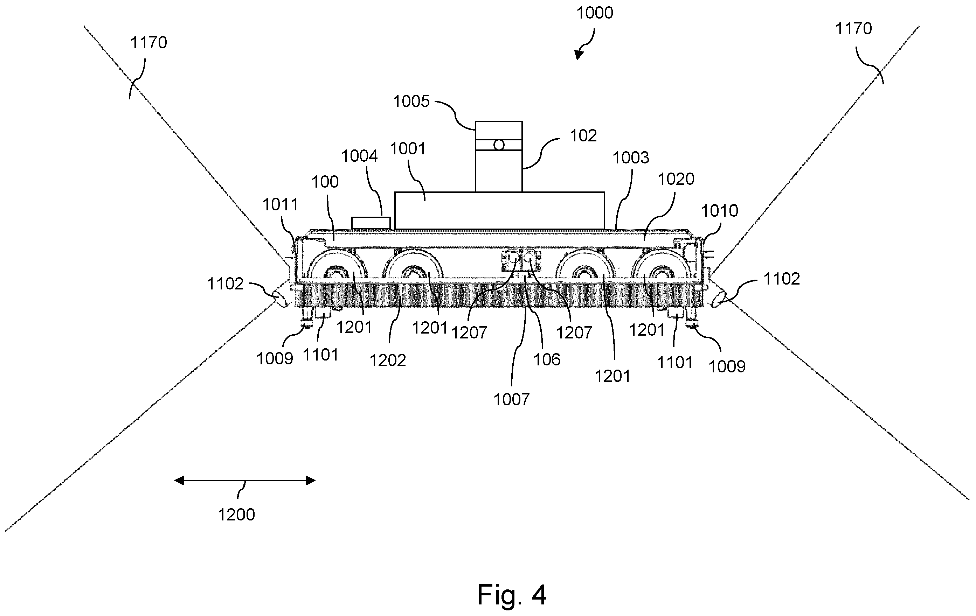

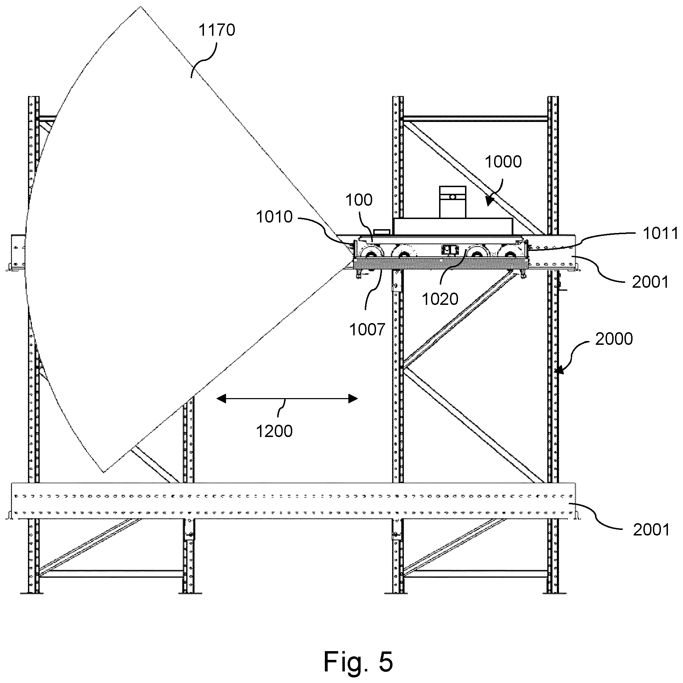

Fig. 4 illustrates schematically the lateral side 1020 of the square like-shaped shuttle 1000 with illustrated wide fields of detection according to the disclosure. Components having identical reference numbers than on Fig. 1 or Fig. 2 or Fig. 3 fulfil the same function. Fig. 5 illustrates the lateral side 1020 of the square like-shaped shuttle 1000 in a racking frame 2000 of an automated storage. Components having identical reference numbers than on Fig. 1 or Fig. 2 or Fig. 3 or Fig. 4 fulfil the same function. Fig. 6 illustrates a perspective view of the square like-shaped shuttle 1000 in the racking frame 2000 of the automated storage. Components having identical reference numbers than on Fig. 1 or Fig. 2 or Fig. 3 or Fig. 4 or Fig. 5 fulfil the same function. Therefore, the wide angle cameras 1107 and 1207 being positioned on the plurality of lateral sides 1010, 1011, 1020 and 1021 of the shuttle 1000, cover a wide range of detection at least as illustrated in Fig. 1, Fig. 4, Fig. 5, and Fig. 6. It is understandable that the visual inspection means 101 can cover a larger range of detection than the one as illustrated in Fig. 1, Fig. 4, Fig. 5, and Fig. 6. The covered range of detection by the shuttle 1000 can be 360 degrees around the shuttle 1000, thereby forming a sphere of detection around the shuttle. It is understandable that the covered range of detection can have different shape and/or size from the ones as illustrated in Fig. 1, Fig. 4, Fig. 5, and Fig. 6. The driving means 1101 and 1201 in the shuttle 1000 enables the shuttle 1000 to move in two directions within the racking frame 2000 along the rails 2001, usually two directions in a substantially horizontal plane. The two directions, i.e., the lateral direction 1100 and the longitudinal direction 1200 are indicated in Fig. 1-6. The wheels 1101 enable the shuttle 1000 to move along the lateral direction 1100. The wheels 1201 enable the shuttle 1000 to move along the longitudinal direction 1200. In one set of example embodiments, in standby mode, the wheels 1101 are in contact with the rails 2001 of the racking frame 2000 while the wheels 1201 are not in contact with the rails 2001. Therefore, the shuttle 1000 can move along the lateral direction 1100. To move along the longitudinal direction 1200, the wheels 1201 are moved synchronically downwards along a direction perpendicular to the bottom side 1007 of the shuttle 1000, thereby being in contact with the rails 2001 while the wheels 1101 being no longer in contact with the rails 2001. This switching in wheels 1101 and 1201 which are in contact with the rails 2001 can be enabled by extra driving means 200.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A shuttle (1000) adapted to move in an automated storage comprising a racking frame (2000), the shuttle (1000) comprising:
- at least one visual inspection means (101) adapted to acquire images of the shuttle's environment;
- one or more motion measurement means (102) adapted to detect movement parameters of the shuttle (1000);
- at least one ambient sensor (103) adapted to detect ambient conditions of the shuttle (1000);
- a processor (104) operatively connected to the at least one visual inspection means (101), the one or more motion measurement means (102) and the at least one ambient sensor (103);
- one or more communication means (1004) adapted to transmit signals to the processor (104), the signals comprising:
∘ visual inspection signals acquired by the at least one visual inspection means (101); and/or
∘ movement parameter signals acquired by the one or more motion measurement means (102); and/or
∘ ambient condition signals acquired by the at least one ambient sensor (103); wherein
- the processor (104) is configured to receive and process the signals transmitted by at least one of the one or more communication means (1004) to generate processed signals; and
- at least one transmission means (105) adapted to transmit the processed signals to control the shuttle's movement and/or to communicate with one or more external systems within the automated storage.

2. The shuttle (1000) according to claim 1, wherein the shuttle (1000) further comprises at least one distance sensor (106) that is adapted to determine the shuttle's (1000) distance relative to the racking frame (2000); wherein the processor (104) further operatively connected to the at least one distance sensor (106); and wherein the one or more communication means (1004) adapted to transmit signals to the processor (104), said signals further comprising distance inspection signals acquired by the at least one distance sensor (106).

3. The shuttle (1000) according to claim 2, wherein the at least one transmission means (105) is adapted to transmit the processed signals to control the shuttle's (1000) movement and to communicate with one or more external systems within the automated storage.

4. The shuttle (1000) according to claim 3, wherein the processor (104) is configured to receive and process the signals transmitted by at least one of the one or more communication means (1004) to generate processed signals, and refine and adjust the visual inspection signals based on the motion inspection signals and the environment inspection signals to generate processed signals.

5. The shuttle (1000) according to any one of the proceeding claims, further comprises a housing (100) adapted to accommodate the plurality of components, wherein the housing (100) comprises a plurality of lateral sides (1010, 1011, 1020, 1021), a top side (1003) and a bottom side (1007); wherein the at least one visual inspection means (101) is positioned at at least one of the plurality of lateral sides (1010, 1011, 1020, 1021), the top side (1003), the bottom side (1007) and/or inside the housing (100).

6. The shuttle (1000) according to claim any one of the proceeding claims, wherein the at least one distance sensor (106) is positioned at at least one of the plurality of lateral sides (1010, 1011, 1020, 1021), the top side (1003), the bottom side (1007) and/or inside the housing (100).

7. The shuttle (1000) according to claim 5, wherein the at least one visual inspection means (101) is adapted to detect one or more of the following:
- foreign material and foreign objects in the racking frame (2000) in which the shuttle (1000) moves;
- abnormalities on parts of the racking frame (2000) in which the shuttle (1000) moves;
- deviating dimension of the parts of the racking frame (2000) in which the shuttle (1000) moves;
- deviating orientation of the parts of the racking frame (2000) in which the shuttle (1000) moves.

8. The shuttle (1000) according to any one of the preceding claims, wherein the at least one visual inspection means (101) comprise one or more of the following:
- one or more cameras (1005, 1107, 1207);
- one or more stereo cameras;
- one or more infrared cameras.

9. The shuttle (1000) according to claim 1, wherein the one or more motion inspection means (102) comprise one or more of the following:
- one or more inertial measurement units, IMU's;
- one or more accelerometers.

10. The shuttle (1000) according to claim 1, wherein the at least one ambient sensor (103) comprise one or more of the following:
- one or more temperature sensors;
- one or more luminosity sensors;
- one or more humidity sensors.

11. The shuttle (1000) according to claim 6, wherein the at least one distance sensor (106) comprise one or more of the following:
- one or more light detection and ranging sensors, LiDAR sensors;
- one or more ultrasonic sensors;
- one or more proximity sensors.

12. The shuttle (1000) according to any one of the preceding claims, further comprises a driving means (1101, 1201) to move the shuttle (1000) in the racking frame (2000) of the automated storage.

13. The shuttle (1000) according to any one of the preceding claims, further comprises a cleaning means (1001, 1006, 1202, 1102) to remove foreign material and foreign objects from the racking frame (2000) while moving through the racking frame (2000).

14. The shuttle (1000) according to claim 13, wherein the cleaning means (1001, 1006, 1202, 1102) comprise one or more of the following:
- at least one brush (1202);
- at least one vacuum cleaning means (1006);
- at least one blowing means (1001 );
- at least one magnet;
- at least one spray device adapted to spray a fluid, such as a liquid;
- at least one absorption means adapted to absorb a liquid.

15. The shuttle (1000) according to claim any one of the preceding claims, further comprises a positioning means (107), wherein the positioning means (107) is adapted to determine a location and/or an orientation of the shuttle (1000) referring to a standard geodetic system.
